# EUROPEAN PATENT SPECIFICATION

(11) **EP 0 358 494 B1**
(45) Date of publication and mention of the grant of the patent: **30.03.1994**
(21) Application number: 89309047.2
(22) Date of filing: 06.09.1989
(51) Int. Cl.: A01N 25/02

(54) **Emulsifiable concentrate of a pesticide**
Emulsionskonzentrat eines Pestizids
Concentré émulsifiable d'un pesticide

(30) Priority: 06.09.1988 GB 8820886
(43) Date of publication of application: 14.03.1990
(73) Proprietor: DOWELANCO, Indianapolis, Indiana 46268-3030 (US)
(72) Inventor: Mulqueen, Patrick Joseph, Abingdon, Berkshire OX14 3YJ (GB); Paterson, Eric Simmers, Wantage, Oxfordshire OX12 ONN (GB); Rance, Robert William, D-7580 Buehl (DE)
(74) Representative: Raynor, John

(56) References cited:
- EP-A- 0 044 955
- EP-A- 0 124 253
- US-A- 3 342 673
- US-A- 3 954 977

## Description

This invention relates to pesticidal compositions, i.e. compositions comprising a pesticide such as an insecticide, herbicide, or fungicide.

In particular, the invention relates to such compositions in the form of emulsifiable concentrates, of water-insoluble pesticidal materials.

Of the many forms of preparations in which pesticidal compositions can be prepared, emulsifiable concentrates are very advantageous, because of their relatively low bulk for shipping purposes, coupled with the convenience of being able to apply the active material at any desired dilution, for convenient application at the locus of use. For this reason, emulsifiable concentrates of pesticidal materials are widely used, in the field of herbicides, pesticides, and fungicides.

Emulsifiable concentrates generally comprise one or more active material, a suitable solvent, and one or more surfactants, such as to ensure emulsification of the composition, on the addition of water.

Such compositions are widely used for a broad range of active materials. There is difficulty however in producing emulsifiable concentrates which are satisfactory in use, when the active material is a crystalline material which has negligible solubility in water. Although it is in general possible to produce solutions of such active materials, by the use of polar solvents such as N-methylpyrrolidone, cyclohexanone, isophorone, and dimethylformamide, and to incorporate surfactants such that the resulting composition will produce initially an emulsion on the addition of water, crystal growth of the pesticidal material in the dispersed phase tends to take place on standing because of migration of water from the aqueous phase to the dispersed phase and because of the migration of the polar solvent into the aqueous phase. A particular problem arises in this regard with the so-called acyl urea and acylthiourea classes of insecticides. For maximum biological efficacy, it is important that these active materials should be applied to the locus in solution, or at worst that they should have a particle size which is as small as possible, normally of the order of 1 micron or less.

When emulsions are prepared from an emulsifiable concentrate of such materials, crystal growth typically takes place rapidly, such that particles of the active material are formed in the emulsion droplets, which have a size substantially in excess of 1 micron.

U.S. Patent No. 3342673 discloses the use of certain dialkylamides, and in particular N,N-dimethyl caprylamide, as a solvent for certain carbamates. The resulting concentrated solutions can be utilised either as emulsifiable concentrates, or may be diluted with kerosene, and used as kerosene solutions.

When highly insoluble active materials, such as the acyl ureas and acyl thioureas mentioned above, are used as the active materials in a composition as proposed in U.S. Patent No. 3342673 however, migration of water into the non-aqueous phase after emulsification causes crystal growth of the active material, and results in the particle size of the resulting composition being less than optimum, within a short time of emulsification taking place.

US Patent 4213776 discloses herbicidal emulsifiable concentrates, in which an active material is dissolved in a combination of a water-immiscible ketone solvent and a water-miscible amide solvent. The amide co-solvent in this reference is employed simply to affect the low temperature properties of the concentrate composition, and when the composition is dispersed into an aqueous phase, will immediately migrate the aqueous phase. Thus, the techniques disclosed in this reference do not in any way improve the crystal growth characteristics of the composition.

We have now discovered that an improved pesticidal composition of such highly water-insoluble active materials can be prepared, by including within an emulsifiable concentrate composition of the active and a suitable dimethylamide, a co-solvent which is miscible with the dimethylamide, and in which water is soluble to an extent of not more than 1%.

Accordingly, in a first aspect of the invention, there is provided a pesticidal composition in the form of an emulsifiable concentrate of a pesticidal compound comprising:
a) a water-insoluble crystalline pesticidal material
b) an organic solvent (hereinafter referred to as a co-solvent) and
c) a surfactant,
   wherein the solubility of component (a) in component (b) alone is not more than 5% by weight
   characterised in that the composition also comprises
(d) a dimethylamide of a C₈ to C₁₀ carboxylic acid,
   in that the co-solvent is miscible with component (d), and in that the solubility of water in component (b) is less than 1% by weight.

The term "crystalline" as used herein is intended to include any material which normally exists in a solid crystalline form at ambient temperatures (around 20°C). A crystalline material, as the term is intended to be understood, herein, is one which, when dissolved in acetone, and the acetone solution thrown into an excess of water, forms a solid crystalline precipitate.

The composition of the invention is particularly suitable for the formulation of pesticidal substances having a solubility in the solvent employed (component b) of not more than 2wt%, more particularly not more than 1wt%. In particular type of compound which may suitably be formulated by the method of the invention are compounds of the formula:-

R¹CO.NH.CX.NYR²

wherein R¹ is an aromatic or heteroaromatic ring optionally substituted with one or more halogen atom or alkoxy, haloalkoxy, nitro, cyano, thio or amino group;
X is oxygen or sulphur
Y is hydrogen or an alkyl or cycloalkyl group having from 1 to 6 carbon atoms,
and R² is an aromatic or heteroaromatic group, optionally substituted with one or more halogen atoms or with one or more amino, cyano, nitro, sulphenyl, alkyl, alkoxy, haloalkyl, haloalkoxy, carboxyalkyl, carboxylphenyl, oxyphenyl, oxypyridyl, oxypyrazinyl, aminoalkyl, aminophenyl, thioalkyl or thiophenyl group.

Particularly suitable for use in the compositions of the invention are the insecticides disclosed in GB 2082913A, and the following compounds:
1-(4-chlorophenyl)-3-(2,6-difluorobenzoyl) urea (common name Dimilin)
1-(3,5-dichloro-2,4-difluorophenyl)-3-(2,6-difluorobenzoyl) urea (common name Teflubenzuron)
1-[3,5-dichloro-4-((5-trifluoromethyl)-3-chloro -2-pyridyloxy)-phenyl]-3-(2,6-difluorobenzoyl) urea (common name Chlorfluazuron)
1-(4-trifluoromethoxyphenyl)-3-(2-chlorobenzoyl) urea (common name Alsystin)
1-[3,5-dichloro-4-(1,1,2,2-tetra-fluoroethoxy) phenyl]-3-(2,6-difluorobenzoyl) urea (common name Hexafluron)
1-(2-fluoro-4-(2-chloro-4-trifluoromethyl-phenoxy) phenyl)-3-(2,6-difluorobenzoyl) urea (common name Flufenoxuron), and
1-(4-(1,1-difluoro-2,2-dichloroethoxy)phenyl)-3-(2-chlorobenzoyl) urea.

The preferred cosolvents for use in the compositions of the invention are benzene or napthalene, substituted with from one to three C₁ to C₅ alkyl groups (for example xylene), alkyl esters containing from 5 to 10 carbon atoms (for example hexyl acetate or heptyl acetate), chlorinated hydrocarbons, (e.g. 1,1,1-trichloroethane), polyisobutene, or alkylated cyclohexanones (e.g. 3,3,5-trimethyl- cyclohexanone).

In a particularly preferred embodiment, the cosolvent may itself have pesticidal activity. Suitable examples of such cosolvents having pesticidal activity are the following:-

| | | |
|---|---|---|
| Aldicarb | Aldrin | Allethrin |
| Amitraz | Azamethiphos | Azinphos-ethyl |
| Azinphos-methyl | Bendiocarb | Benfuracarb |
| Bensultap | Benzoximate | Bifenthrin |
| Binapacryl | Bioallethrin | Bioresmethrin |
| Bromophos | Bromophos ethyl | Bromopropylate |
| Buprofezin | Camphechlor | Carbaryl |
| Carbophenothion | Chlordane | Chlordimeform |
| Chlorfenson | Chlorfenvinos | Chlormephos |
| Chlorbenzilate | Chlormethiuron | Chloropropylate |
| Chlorphoxim | Chloethocarb | Chlorpyrifos |
| Chlorpyrifos-methyl | Crotoxyphos | Cyanophos |
| Cyfluthrin | Cyhalothrin | Cypermethrin |
| Deltamethrin | Demeton | Demeton-S-methyl |
| Dailifos | Diazinon | |
| 0-2,4-Dichlorophenyl | 0-ethyl-phenylphosphonothioate | |
| Dicofol | Dinobuton | Dinocap |
| Dioxacarb | Dioxabenzofos | Dioathion |
| Disulfoton | Endosulfan | EPN |
| Ethiofencarb | Ethion | Etrimfos |
| Fenbutatin oxide | Fenitrothion | Fenobucarb |
| Fenothiocarb | Fenoxycarb | Fenpropathrin |
| Fenson | Fensulfothion | Fenthion |
| Fentin acetate | Fenvalerate | Flubenzimine |
| Flucythrinate | Fluvalinate | Fonofos |
| Formetanate | Formothion | Furathiocarb |
| Lindane | Heptachlor | Heptenophos |
| Hexythiazox | Hydroprene | Isofenphos |
| Isoprocarb | Isothioate | Malathion |
| Mecarbam | Mephosfolan | Methacrifos |
| Methidathion | Methiocarb | Methoprene |
| Methoxychlor | Parathion | Parathion methyl |
| Permethrin | Phenothrin | Phenthoate |
| Phorate | Phosalone | Phosmet |
| Phoxim | Piperonyl butoxide | |
| Pirimicarb | Pirmiphos-ethyl | Pirimiphos-methyl |
| Profenofos | Promecarb | Propaphos |
| Propargite | Propetamphos | Propoxur |
| Prothiofos | Prothoate | Pyrazophos |
| Pyrethrins | Quinalphos | Quinomethionate |
| Resmethrin | Sulfotap | Sulprofos |
| Tefluthrin | Temephos | Tetrachlorvinphos |
| Tetradifon | Tetramethrin | Thiodicarb |
| Thiometon | Tralomethrin | Triazophos |
| 2,2,2-trichloro-1-(3,4-dichlorophenyl)-ethyl acetate xylylcarb | | |
| | 3,5-xylylmethyl-carbamate | |

The surfactant in accordance with the invention may be selected from the known range of anionic, nonionic and cationic emulsifiers. The type and amount of surfactant to be employed is such as to ensure that the resulting composition is readily emulsifiable in water, and although the type and amount of surfactant to be employed will vary, depending on the precise nature of the composition, selection of an appropriate type and amount of surfactant is well within the competence of one skilled in the art. A list of suitable surfactants may be found, for example in "McCutcheon's Emulsifiers and Detergents" (1985 Edition).

Examples of anionic surfactants are the alkali metal, alkaline earth and amine salts of dodecyl benzene sulphonic and or other alkylarylsulphonic acids, sodium dialkyl sulphosuccinate such as sodium diisoctylsulphosuccinate and the amine salts of ether sulphates.

Examples of nonionic surfactants are fatty acid alkanolamides, the condensation products of fatty acid esters, fatty alcohols, fatty acid amides or fatty amines with ethylene and/or propylene oxide, alkyl- , alkenyl or polyaryl-substituted phenols with ethylene and/or propylene oxide, fatty esters of polyhydric alcohol esters e.g. sorbitan fatty acid esters, condensation product of such esters with ethylene oxide, e.g. polyoxyethylene sorbitan fatty acid esters, block copolymers of ethylene oxide and propylene oxides, ethoxylated lanolin alcohols or ethoxylated lanolin acids. Examples of a cationic surfactants include, for instance, acetates and oleates of aliphatic mono-, di- or polyamines.

Anionic/nonionic blends are preferred and are often advantageously chosen as preblended systems for ease of handling, reproducibility and cost effectiveness. Such systems are well known to those skilled in the art and include those sold under the Trade Marks TENSIOFIX B.7416, B.7438 and B.7453 and ATLOX 4851B and 4855B.

The amount of the water-insoluble crystalline pesticidal material which may be utilised in the compositions of the invention may vary within a wide range, but will generally be in the range of from 0.1 to 50% by weight, preferably from 1 to 40% by weight, more preferably from 5 to 20% by weight of the composition. The amount of dimethylamide employed will generally be in the range of from 5 to 90% by weight, preferably from 10 to 50% by weight, more preferably from 15 to 30% by weight of the composition.

The amount of the cosolvent employed will also depend very much on the nature of the cosolvent employed. Generally however the amount will be in the range of 5 to 90% by weight, preferably from 15 to 80% by weight, more preferably from 30 to 70% by weight.

The amount of surfactant employed in the formulation of the composition must be sufficient to emulsify the other components on the addition of water, and will generally be from 1 to 40% by weight, preferably from 2 to 20% by weight, more preferably from 5 to 15% by weight of the composition.

A number of preferred embodiments of the invention are illustrated in the following examples. The "dimethylamide" used in all of the examples was a mixture of the dimethylamides of capric, caproic, and caprylic acids.

All of the compositions were prepared by simple mechanical agitation of the ingredients together, using a Silveron (Trade Mark) high shear mixer. The nature and water solubility of the various cosolvents employed are as noted in Table 1.

**Table 1**

| | Solubility of water in solvent (H20/Solv) |
|---|---|
| chlorpyrifos | .0002% w/w |
| ethiofencarb | 0.18% w/w |
| fenitrothion | 0.0014% w/w |
| endosulfan | 0.0032% w/w |
| methoprene | 0.00014% w/w |
| cypermethrin | 0.00004% w/w |
| xylene | 0.87% w/w |
| Dipropylene glycol monomethyl ether (Trade Mark DOWANOL DPM) | miscible |
| propylene glycol phenyl ether (Trade Mark (DOWANOL PPH) | 1.17% w/w |
| isophorone | 3.8% w/w |
| cyclohexanone | 8.7% w/w |
| dimethoate | 2.5% w/w |

### Example 1

| | g |
|---|---|
| Hexafluron | 50 |
| Dimethylamide | 200 |
| Anionic/nonionic blended surfactant A (Trade Mark TENSIOFIX B7438) | 40 |
| Anionic/nonionic blended surfactant B (Trade Mark TENSIOFIX B7453) | 30 |
| Cocoamine ethoxylate (Trade Mark ETHOMEEN C-25) | 30 |
| Xylene | Balance to 1 litre |

A 1% dilution in water produced an excellent emulsion and no evidence of crystallisation after 24 hours.

### Example 2

| | g |
|---|---|
| Chlorfluazuron | 50 |
| Dimethylamide | 300 |
| Anionic/nonionic blended surfactant A (Trade Mark TENSIOFIX B7435) | 40 |
| Anionic/nonionic blended surfactant B (Trade Mark TENSIOFIX B7458) | 30 |
| Cocoamine ethoxylate (Trade Mark Ethomeen C-25) | 30 |
| Xylene | Balance to 1 litre |

A 1% dilution in water produced an excellent emulsion and no evidence of crystallisation after 24 hours.

### Example 3

| | g |
|---|---|
| Diflubenzuron | 10 |
| Dimethyl amide | 400 |
| Anionic/nonionic blended surfactant A (Trade Mark TENSIOFIX B7438) | 400 |
| Anionic/nonionic blended surfactant B (Trade Mark TENSIOFIX B7453) | 30 |
| Cocoamine ethoxylate (Trade Mark ETHOMEEN C-25) | 40 |
| Xylene | Balance to 1 litre |

A 1% dilution in water produced an excellent emulsion and no evidence of crystallisation after 24 hours.

### Example 4

| | g |
|---|---|
| 1-(4-(1,1-difluoro-2,2-dichloroethoxy) phenyl)-3-(2-chlorobenzoyl) urea | 50 |
| Dimethylamide | 300 |
| Anionic/nonionic blended surfactant A (Trade Mark TENSIOFIX B7438) | 40 |
| Anionic/nonionic blended surfactant B (Trade Mark TENSIOFIX B7453) | 30 |
| Cocoamine ethoxylate (Trade Mark ETHOMEEN C-25) | 30 |
| Xylene | Balance to 1 litre |

A 1% dilution in water produced an excellent emulsion and no evidence of crystallisation after 24 hours.

### Example 5

| | g |
|---|---|
| Hexafluron | 30 |
| Chlorpyrifos | 480 |
| Dimethylamide | 150 |
| Calcium dodecylbenzene sulphonate (Trade Mark AGRILAN X-98) | 30 |
| Castor oil ethoxylate + 40E0 (Trade Mark BIOSOFT HR40) | 70 |
| Xylene | Balance to 1 litre |

A 1% dilution in water produced an excellent emulsion and no evidence of crystallisation after 24 hours.

### Example 6

| | g |
|---|---|
| Hexafluron | 50 |
| Ethiofencarb | 100 |
| Calcium dodecylbenzene sulphonate (Trade Mark AGRILAN X-98) | 30 |
| Castor oil ethoxylate + 40E0 (Trade Mark BIOSOFT HR40) | 70 |
| Xylene | Balance to 1 litre |

A 1% dilution in water produced an excellent emulsion and no evidence of crystallisation after 24 hours.

### Example 7

| | g |
|---|---|
| Hexafluron | 50 |
| Chlorpyrifos | 480 |
| Calcium dodecylbenzene sulphonate (Trade Mark AGRILAN X-98) | 30 |
| Castor oil ethoxylate + 40E0 (Trade Mark BIOSOFT HR40) | 40 |
| Castor oil ethoxylate + 55EO (Trade Mark BIOSOFT HR55) | 30 |
| Dimethylamide | 200 |
| Xylene | Balance to 1 litre |

A 1% dilution in water produced an excellent emulsion and no evidence of crystallisation after 24 hours.

### Example 8

| | g |
|---|---|
| Hexafluron | 50 |
| Fenitrothion | 500 |
| Coconut Diethanolamide (Trade Mark ETHYLAN LD) | 20 |
| Castor oil ethoxylate + 33E0 | 80 |
| Dimethylamide | Balance to 1 litre |

A 1% dilution in water produced a good emulsion. No evidence of crystallisation of the active ingredients was observed after 24 hours.

### Example 9

| | g |
|---|---|
| Hexafluron | 30 |
| Endosulfan | 480 |
| Anionic/nonionic blended Surfactant A | 50 |
| Castor oil ethoxylate + 54E0 | 50 |
| Dimethylamide | Balance to 1 litre |

A 1% dilution in water produced a good emulsion. No evidence of crystallisation of the active ingredients was apparent after 24 hours.

### Example 10

| | g |
|---|---|
| Hexafluron | 30 |
| Methoprene | 600 |
| Calcium dodecylbenzene sulphonate (Trade Mark AGRILAN X-98) | 30 |
| Castor oil ethoxylate + 40E0 (Trade Mark BIOSOFIX HR40) | 30 |
| Castor oil ethoxylate + 55EO (Trade Mark BIOSOFT HR55) | 40 |
| Dimethylamide | Balance to 1 litre |

A 1% dilution in water produced a good emulsion. On standing for 24 hours there was no evidence of crystallisation of the active ingredient.

### Example 11

| | g |
|---|---|
| Hexafluron | 50 |
| Cypermethrin | 50 |
| Anionic/nonionic blended surfactant (Trade Mark ATLOX 4855B) | 20 |
| Castor oil ethoxylate + 50E0 | 80 |
| Dimethylamide | Balance to 1 litre |

A 1% dilution in water produced a good emulsion. On standing for 24 hours no crystallisation of active ingredient was apparent.

The compositions prepared were all highly biologically active.

It will be appreciated that it may sometimes be quite difficult to select the appropriate combination of surfactants to produce an emulsifiable concentrates for a particular combination of active material and cosolvent. This tends to be a difficulty in particular when the cosolvent is itself pesticidally active. In such circumstances, the optimum blend of active material and emulsifiers may be determinable only by extensive trial and error, but such is well within the competence of one skilled in the art. The important feature of the compositions of the present invention is that even those which are difficult to emulsify do not show crystallisation of the crystalline pesticide component on standing.

A number of additional compositions were prepared for comparison purposes, to illustrate the effect of using cosolvents with water solubility of greater than 1%. The composition were prepared in the same manner as Examples 1 to 11 above,

### Comparative Example 1

| | g |
|---|---|
| Hexafluron | 50 |
| Dimethylamide | 200 |
| Calcium dodecylbenzene sulphonate (Trade Mark AGRILAN X-98) | 30 |
| Castor oil ethoxylate + 40EO (Trade Mark BIOSOFT HR40) | 70 |
| Dowanol DPM | Balance to 1 litre |

A 1% dilution in water produced a very poor emulsion which on standing deposited a white crystalline solid after 4 hours.

### Comparative Example 2

| | g |
|---|---|
| Hexafluron | 50 |
| Dimethylamide | 200 |
| Calcium dodecylbenzene sulphonate | 30 |
| (Trade Mark AGRILAN X-98) | |
| Castor oil ethoxylate + 40EO | 70 |
| (Trade Mark BIOSOFT HR40) | |
| Dowanol PPH | Balance to 1 litre |

A 1% dilution in water produced a poor emulsion. On standing a white crystalline solid was deposited after 24 hours.

### Comparative Example 3

| | g |
|---|---|
| Hexafluron | 50 |
| Dimethylamide | 200 |
| Calcium dodecylbenzene sulphonate (Trade Mark AGRILAN X-98) | 30 |
| Castor oil ethoxylate + 40EO (Trade Mark BIOSOFT HR40) | 70 |
| Isophorone | Balance to 1 litre |

A 1% dilution in water produced a moderate emulsion. On standing the system produced a trace of cream plus a white crystalline deposit after 24 hours.

### Comparative Example 4

| | g |
|---|---|
| Hexafluron | 50 |
| Dimethylamide | 200 |
| Calcium dodecylbenzene sulphonate (Trade Mark AGRILAN X-98) | 30 |
| Castor oil ethoxylate + 40EO (Trade Mark BIOSOFT HR40) | 70 |
| Cyclohexanone | Balance to 1 litre |

A 1% dilution in water produced a poor emulsion. On standing the solution deposited 0.2% v/v of a white crystalline solid after 24 hours.

### Comparative Example 5

| | g |
|---|---|
| Hexafluron | 50 |
| Dimethoate | 500 |
| Calcium dodecylbenzene sulphonate (Trade Mark AGRILAN X-98) | 30 |
| Castor oil ethoxylate + 40EO (Trade Mark BIOSOFT HR40) | 70 |
| Dimethylamide | Balance to 1 litre |

A 1% dilution in water produced a poor emulsion which on standing for 24 hours deposited 0.25% of a white crystalline solid.

### Comparative Example 6

| | g |
|---|---|
| Hexafluron | 50 |
| Dimethylamide | 200 |
| Calcium dodecylbenzene sulphonate (Trade Mark AGRILAN X-98) | 30 |
| Castor oil ethoxylate + 40EO (Trade Mark BIOSOFT HR40) | 70 |
| Dimethoate | 500 |

A 1% dilution in water produced a very poor emulsion which on standing for 24 hours produced 0.59% v/v of a white crystalline material.

### Comparative Example 7

| | g |
|---|---|
| Hexafluron | 230 |
| Dimethylamide | 700 |
| Sorbitan monolaurate + 20E0 (Trade Mark TWEEN 20) | 35 |
| Calcium dodecyl benzene sulphonate (Trade Mark AGRILAN X-98) | 17.5 |
| Amino-dodecyl benezene sulphonate (Trade Mark NINATE 411) | 17.5 |

A 1% dilution in water produced a reasonable emulsion which on standing for 24 hours deposited a white crystalline solid.

### Comparative Example 8

| | g |
|---|---|
| 1-(4-1,1-difluoro-2,2-dichloro ethoxy) phenyl)-3-(2-chlorobenzoyl) urea | 50 |
| dimethyl formamide | 70 |
| anionic/nonionic surfactant blend (Trade Mark Toximul R) | 30 |
| Nonionic surfactant (TM Atlox 1096) | 40 |
| Octan-1-ol | 5 |
| Isophorone | Balance |
| (Atlox 1096 as sold in the UK is equivalent to the material sold as Atlox 1196 in the USA) | |

A 1% v/v dilution of this concentrate in 500ppm CaCO₃ equivalent water at 20°C gave rise to the formation of a white precipitate in less than 24 hours.

### Comparative Example 9

| | g |
|---|---|
| (4-chlorphenyl)3-(2,6-difluorobenzoyl) urea | 30 |
| dimethyl formamide | 200 |
| Toximul R | 30 |
| Atlox 1096 | 25 |
| Octan-1-ol | 5 |
| Isophorone | Balance |

A 1% v/v dilution of this concentrate in 500ppm CaC0₃ equivalent water at 20°C gave rise to the formation of a white crystalline precipitate in under 24 hours.

## Claims

1. A pesticidal composition in the form of an emulsifiable concentrate of a pesticidal compound comprising:
a) a water-insoluble crystalline pesticidal material
b) an organic solvent and
c) a surfactant,
wherein the solubility of component (a) in component (b) alone is not more than 5% by weight
characterised in that the composition also comprises
(d) a dimethylamide of a C₈ to C₁₀ carboxylic acid,
in that the said organic solvent is miscible with component (d), and in that the solubility of water in component (b) is less than 1% by weight.

2. A composition as claimed in Claim 1, wherein the water insoluble crystalline pesticidal compound is a compound of the formula
R¹CO.NH.CX.NYR²
wherein R¹ is an aromatic or heteroaromatic ring optionally substituted with one or more halogen atom or alkoxy, haloalkoxy, nitro, cyano, thio or amino group;
X is oxygen or sulphur
Y is hydrogen or an alkyl or cycloalkyl group having from 1 to 6 carbon atoms,
and R² is an aromatic or heteroaromatic group,
optionally substituted with one or more halogen atom or with one or more amino, cyano, nitro, sulphenyl, alkyl, alkoxy, haloalkyl, haloalkoxy, carboxyalkyl, carboxylphenyl, oxyphenyl, oxypyridyl, oxypyrazinyl, aminoalkyl, aminophenyl, thioalkyl or thiophenyl group.

3. A composition as claimed in Claim 2, wherein the pesticide is:-
1-(4-chlorophenyl)-3-(2,6-difluorobenzoyl) urea,
1-(3,5-dichloro-2,4-difluorophenyl)-3-(2,6-difluorobenz oyl) urea,
1-[3,5-dichloro-4-((5-trifluoromethyl)-3-chloro-2-pyridyloxy)-phenyl]-3-(2,6-difluorobenzoyl) urea,
1-(4-trifluoromethoxyphenyl)-3-(2-chlorobenzoyl) urea,
1-[3,5-dichloro-4-(1,1,2,2-tetra-fluoroethoxy)phenyl]-3-(2,6-difluorobenzoyl) urea,
1-(2-fluoro-4-(2-chloro-4-trifluoromethyl-phenoxy) phenyl)-3-(2,6-difluorobenzoyl) urea, or
1-(4-(1,1-difluoro-2,2-dichloroethoxy)phenyl)-3-(2-chlorobenzoyl) urea.

4. A composition as claimed in any one of Claims 1 to 3, wherein the water insoluble crystalline pesticide is present in an amount of from 1 to 40% by weight of the composition.

5. A composition as claimed in Claim 4, wherein the water insoluble crystalline pesticide is present in an amount of from 5 to 20% by weight of the composition.

6. A composition as claimed in any one of the preceding claims, wherein the dimethylamide is present in an amount of from 10 to 50% by weight of the composition.

7. A composition as claimed in Claim 6, wherein the dimethylamide is present in an amount of from 15 to 30% by weight of the composition.

8. A composition as claimed in any one of the preceding claims, wherein the said organic solvent is benzene or naphthalene substituted with from one to three C₁ to C₅ alkyl groups, an alkyl ester containing from 5 to 10 carbon atoms, a chlorinated hydrocarbon, a polyisobutene, or an alkylated cyclohexanone.

9. A composition as claimed in any one of the preceding claims, wherein the said organic solvent is pesticidally active.

10. A composition as claimed in any one of the preceding claims wherein the said organic solvent is present in the composition in an amount of from 15 to 80% by weight.

11. A composition as claimed in Claim 10 wherein the said organic solvent is present in the composition in an amount of from 30 to 70% by weight.

12. A composition as claimed in any one of the preceding claims wherein the surfactant is present in an amount of from 2 to 20% by weight of the composition.

13. A composition as claimed in Claim 12 wherein the surfactant is present in an amount of from 5 to 15% by weight of the composition.

14. A composition as claimed in any one of the preceding claims, wherein the solubility of component (a) in component (b) is not more than 2%.

15. A composition as claimed in Claim 14, wherein the solubility of component (a) in component (b) not more than 1%.

16. A process of preparing a pesticidal composition comprising mixing components (a) (b) (c) and (d) as specified in one of the preceding Claims.

## Patentansprüche

1. Pestizide Zusammensetzung in Form eines emulgierbaren Konzentrats einer pestiziden Verbindung, umfassend:
a) ein wasserunlösliches kristallines pesitizides Material
b) ein organisches Lösungsmittel und
c) ein oberflächenaktives Mittel,
worin die Löslichkeit von Komponente (a) in Komponente (b) alleine nicht größer als 5 Gew.-% ist,
**dadurch gekennzeichnet,**
daß die Zusammensetzung ebenfalls umfaßt
d) ein Dimethylamid einer C₈ bis C₁₀ Carbonsäure,
wobei das organische Lösungsmittel mit Komponente (d) mischbar ist und die Löslichkeit von Wasser in Komponente (b) kleiner als 1 Gew.-% ist.

2. Zusammensetzung nach Anspruch 1, worin die wasserunlösliche kristalline pestizide Verbindung eine Verbindung der Formel
R¹CO.NH.CX.NYR²
ist, worin R¹ einen aromatischen oder hetero-aromatischen Ring bedeutet der gegebenenfalls mit einem oder mehreren Halogenatomen oder Alkoxy-, Halogenalkoxy, Nitro-, Cyano-, Thio- oder Aminogruppen substituiert ist;
X Sauerstoff oder Schwefel bedeutet
Y Wasserstoff oder eine Alkyl- oder Cycloalkylgruppe
mit 1 bis 6 Kohlenstoffatomen bedeutet und
R² eine aromatische oder hetero-aromatische Gruppe bedeutet, die gegebenenfalls mit einem oder mehreren Halogenatomen oder mit einer oder mehreren Amino-, Cyano-, Nitro-, Sulphenyl-, Alkyl-, Alkoxy-, Halogenalkyl-, Halogenalkoxy-, Carboxyalkyl-, Carboxyphenyl-, Oxyphenyl-, Oxypyridyl-, Oxypyrazinyl-, Aminoalkyl-, Aminophenyl-, Thioalkyl- oder Thiophenylgruppen substituiert sein kann.

3. Verfahren nach Anspruch 2 worin das Pestizid
1-(4-Chlorphenyl)-3-(2,6-difluorbenzoyl)Harnstoff,
1-(3,5-Dichlor-2,4-difluorphenyl)-3-(2,6-Difluorbenzoyl)Harnstoff,
1-[3,5-Dichlor-4-((5-trifluormethyl)-3-chlor-2-pyridyloxy)-phenyl]-3-(2,6-difluorbenzoyl)Harnstoff,
1-(4-Trifluormethoxyphenyl)-3-(2-chlorbenzoyl)Harnstoff,
1-[3,5-Dichlor-4-(1,1,2,2-tetra-fluorethoxy)phenyl]-3-(2,6-difluorbenzoyl)Harnstoff,
1-(2-Fluor-4-(2-chlor-4-trifluormethyl-phenoxy)phenyl)-3-(2,6 -difluorbenzoyl)Harnstoff oder
1-(4-(1,1-Difluor-2,2-Dichlorethoxy)phenyl)-3-(2-chlorbenzoyl)Harnstoff ist.

4. Zusammensetzung nach einem der Ansprüche 1 bis 3, worin das wasserunlösliche kristalline Pestizid, bezogen auf die Zusammensetzung, in einer Menge von 1 bis 40 Gew.-% vorliegt.

5. Zusammensetzung nach Anspruch 4, worin das wasserunlösliche kristalline Pestizid, bezogen auf die ZusammenSetzung, in einer Menge von 5 bis 20 Gew.-% vorliegt.

6. Zusammensetzung nach einem der vorhergehenden Ansprüche, worin das Dimethylamid, bezogen auf die Zusammensetzung, in einer Menge von 10 bis 50 Gew.-%, vorliegt.

7. Zusammensetzung nach Anspruch 6, worin das Dimethylamid, bezogen auf die Zusammensetzung, in einer Menge von 15 bis 30 Gew.-% vorliegt.

8. Zusammensetzung nach einem der vorhergehenden Ansprüche, worin das organische Lösungsmittel Benzol oder Naphthalin ist, das mit ein bis drei C₁ bis C₅ Alkylgruppen substituiert ist, ein 5 bis 10 Kohlenstoffatome enthaltender Alkylester, ein chlorierter Kohlenwasserstoff, ein Polyisobuten oder ein alkyliertes Cyclohexanon ist.

9. Zusammensetzung nach einem der vorhergehenden Ansprüche, worin das organische Lösungsmittel pestizid wirksam ist.

10. Zusammensetzung nach einem der vorhergehenden Ansprüche, worin das organische Lösungsmittel in der Zusammensetzung in einer Menge von 15 bis 80 Gew.-% vorliegt.

11. Zusammensetzung nach Anspruch 10, worin das organische Lösungsmittel in der Zusammensetzung in einer Menge von 30 bis 70 Gew.-% vorliegt.

12. Zusammensetzung nach einem der vorhergehenden Ansprüche, worin das oberflächenaktive Mittel, bezogen auf die Zusammensetzung, in einer Menge von 2 bis 20 Gew.-% vorliegt.

13. Zusammensetzung nach Anspruch 12, worin das oberflächenaktive Mittel, bezogen auf die Zusammensetzung, in einer Menge von 5 bis 15 Gew.-% vorliegt.

14. Zusammensetzung nach einem der vorhergehenden Ansprüche, worin die Löslichkeit von Komponente (a) in Komponente (b) nicht größer als 2 % ist.

15. Zusammensetzung nach Anspruch 14, worin die Löslichkeit von Komponente (a) in Komponente (b) nicht größer als 1 % ist.

16. Verfahren zum Herstellen einer pestiziden Zusammensetzung umfassend das Mischen der in einem der vorhergehenden Ansprüche spezifizierten Komponenten (a), (b), (c) und (d).

## Revendications

1. Composition pesticide se présentant sous la forme d'un concentré émulsifiable d'un composé pesticide et comprenant :
a) une substance pesticide cristalline, insoluble dans l'eau,
b) un solvant organique, et
c) un composé tensioactif,
la solubilité du composant (a) dans le composant (b) seul ne valant pas plus de 5 % en poids,
ladite composition étant caractérisée en ce qu'elle contient en outre :
d) un diméthylamide d'un acide carboxylique en C₈₋₁₀,
en ce que ledit solvant organique est miscible au composant (d), et en ce que la solubilité de l'eau dans le composant (b) vaut moins de 1 % en poids.

2. Composition conforme à la revendication 1, dans laquelle la substance pesticide cristalline, insoluble dans l'eau, est un composé de formule :
R¹CO-NH-CX-NYR²
dans laquelle
R¹ représente un noyau aromatique ou hétéroaromatique, éventuellement substitué par un ou plusieurs atomes d'halogène ou groupes alcoxy, halogénoalcoxy, nitro, cyano, thio ou amino ;
X représente un atome d'oxygène ou de soufre ;
Y représente un atome d'hydrogène ou un groupe alkyle ou cycloalkyle, comportant de 1 à 6 atomes de carbone ; et
R² représente un noyau aromatique ou hétéroaromatique, éventuellement substitué par un ou plusieurs atomes d'halogène ou par un ou plusieurs groupes amino, cyano, nitro, sulfényle, alkyle, alcoxy, halogénoalkyle, halogénoalcoxy, carboxyalkyle, carboxyphényle, oxyphényle, oxypyridyle, oxypyrazinyle, aminoalkyle, aminophényle, thioalkyle ou thiophényle.

3. Composition conforme à la revendication 2, dans laquelle la substance pesticide est :
de la 1-(4-chlorophényl)-3-(2,6-difluorobenzoyl)urée,
de la 1-(3,5-dichloro-2,4-difluorophényl)-3-(2,6-difluorobenzoyl)urée,
de la 1-[3,5-dichloro-4-(5-trifluorométhyl-3-chloro-2-pyridyloxy)-phényl]-3-(2,6-difluorobenzoyl)urée,
de la 1-(4-trifluorométhoxyphényl)-3-(2-chlorobenzoyl)urée,
de la 1-[3,5-dichloro-4-(1,1,2,2-tétrafluoroéthoxy)-phényl]-3-(2,6-difluorobenzoyl)urée,
de la 1-[2-fluoro-4-(2-chloro-4-trifluorométhyl-phénoxy)-phényl]-3-(2,6-difluorobenzoyl)urée,
ou de la 1-[4-(1,1-difluoro-2,2-dichloroéthoxy)-phényl]-3-(2-chlorobenzoyl)urée.

4. Composition conforme à l'une des revendications 1 à 3, dans laquelle la substance pesticide cristalline insoluble dans l'eau se trouve en une quantité représentant de 1 à 40 % en poids de la composition.

5. Composition conforme à la revendication 4, dans laquelle la substance pesticide cristalline insoluble dans l'eau se trouve en une quantité représentant de 5 à 20 % en poids de la composition.

6. Composition conforme à l'une des revendications précédentes, dans laquelle le diméthylamide se trouve en une quantité représentant de 10 à 50 % en poids de la composition.

7. Composition conforme à la revendication 6, dans laquelle le diméthylamide se trouve en une quantité représentant de 15 à 30 % en poids de la composition.

8. Composition conforme à l'une des revendications précédentes, dans laquelle ledit solvant organique est un benzène ou un naphtalène portant de 1 à 3 substituants alkyle en C₁₋₅, un ester d'alkyle comportant de 5 à 10 atomes de carbone, un hydrocarbure chloré, un polyisobutène ou une cyclohexanone alkylée.

9. Composition conforme à l'une des revendications précédentes, dans laquelle ledit solvant organique possède une activité de pesticide.

10. Composition conforme à l'une des revendications précédentes, dans laquelle ledit solvant organique se trouve en une quantité représentant de 15 à 80 % en poids de la composition.

11. Composition conforme à la revendication 10, dans laquelle ledit solvant organique se trouve en une quantité représentant de 30 à 70 % en poids de la composition.

12. Composition conforme à l'une des revendications précédentes, dans laquelle le tensioactif se trouve en une quantité représentant de 2 à 20 % en poids de la composition.

13. Composition conforme à la revendication 12, dans laquelle le tensioactif se trouve en une quantité représentant de 5 à 15 % en poids de la composition.

14. Composition conforme à l'une des revendications précédentes, dans laquelle la solubilité du composant (a) dans le composant (b) ne vaut pas plus de 2 %.

15. Composition conforme à la revendication 14, dans laquelle la solubilité du composant (a) dans le composant (b) ne vaut pas plus de 1 %.

16. Procédé de préparation d'une composition pesticide, qui comporte le fait de mélanger les composants (a), (b), (c) et (d) indiqués dans l'une des revendications précédentes.
